# EUROPÄISCHE PATENTSCHRIFT

(11) **EP 1 991 470 B1**
(45) Veröffentlichungstag und Bekanntmachung des Hinweises auf die Patenterteilung: **26.08.2009**
(21) Anmeldenummer: 07701918.0
(22) Anmeldetag: 06.03.2007
(51) Int. Cl.: B65D 25/48, A47J 36/14

(54) **VORRICHTUNG ZUM UNFÜLLEN VON SCHÜTTGUT**
APPARATUS FOR EMPTYING BULK MATERIAL
DISPOSITIF POUR DEVERSER DU PRODUIT EN VRAC

(30) Priorität: 09.03.2006 CH 369062006
(43) Veröffentlichungstag der Anmeldung: 19.11.2008
(73) Patentinhaber: Ulrich, Hans Jürgen, 8200 Schaffhausen (CH)
(72) Erfinder: Ulrich, Hans Jürgen, 8200 Schaffhausen (CH)
(74) Vertreter: Wiedmer, Edwin
(86) Internationale Anmeldenummer: PCT/CH2007/000118
(87) Internationale Veröffentlichungsnummer: WO 2007/101361

(56) Entgegenhaltungen:
- DE-U1- 9 016 349
- FR-A- 940 748
- US-A- 2 783 924

## Beschreibung

### Technisches Gebiet der Erfindung

Die vorliegend Erfindung betrifft eine Vorrichtung nach dem Oberbegriff des Anspruchs 1.

### Stand der Technik

Beim Abfüllen von Flüssigkeiten, Flüssigkeits-Feststoff-Gemischen oder fliessfähigen festen bzw. streubaren Stoffen aus einem Behälter, wie z.B. einem Kochtopf, in Gefässe mit beschränkter Öffnung besteht das bekannte Problem, dass der Schüttgutstrahl nicht hinreichend fokussierbar ist, stark streut oder durch Kapillarwirkung an der Aussenwand des Topfes herabläuft. Beispielsweise ist es praktisch unmöglich, beim Einkochen von Konfitüre das aus zerkleinerten Früchten und Säften bestehende Abfüllgut direkt aus dem Topf in Gläser zu schütten, ohne dass Schüttgut danebengeht oder an der Topfaussenwand herabläuft. Das liegt daran, dass der Volumenstrom des Schüttstrahls und die Strahlrichtung stark schwanken oder die Flüssigkeit durch Kapillarwirkung an der Aussenwand haften bleibt und herabläuft.

Um dies zu vermeiden, kann zum Abfüllen z.B. eine Schöpfkelle benutzt werden. Das Schöpfen mit Kellen ist jedoch mühsam. Zudem neigen Schöpfkellen ihrerseits zu ungewolltem Abtropfen des Einfüllguts, sodass nebst dem Verlust von Einfüllgut auch eine Verkleckerung des Materials mit Besudelung der Arbeitsfläche einhergeht.

Eine andere Einfüllhilfe ist die Verwendung eines Einfülltrichters, der von Hand über das Einfüllgefäss gehalten oder darauf aufgesetzt wird. Beides ist sehr unpraktisch und führt beim Entfernen des Trichters vom Gefäss zum Nachtropfen vom Schüttgut, das an der Wand des Trichters haften bleibt und sich langsam löst.

Bekannt ist im Weiteren ein Kochtopf mit einem Schnabel, der an einer Stelle des kreisrunden Randes des Topfs im Herstellungsprozess eingepresst wird. Ein solcher Topf ist in der Regel mit einem Stiel versehen. Der Nachteil des Schnabels besteht darin, dass der Topf bei anderweitigen Kochvorgängen nicht mit einem Deckel dicht verschlossen werden kann.

Eine Vorrichtung der eingangs genannten Art ist aus US-A-2 783 924 bekannt.

### Darstellung der Erfindung

Ausgehend vom Stand der Technik liegt der Erfindung die Aufgabe zugrunde, eine Vorrichtung der eingangs genannten Art zu schaffen, mit der die den Einfüllhilfen nach dem Stand der Technik anhaftenden Nachteile vermieden werden.

Zur erfindungsgemässen Lösung der Aufgabe führt eine Vorrichtung mit den Merkmalen des Anspruchs 1.

Vorteilhafte Weiterbildungen der Erfindung sind Gegenstand von abhängigen Ansprüchen.

Die Ablauffläche und der Steg schliessen im allgemeinen einen Winkel von 100° bis 150°, vorzugsweise von 110° bis 130°, insbesondere von 115° bis 125° ein.

Die Auslaufmündung ist vorzugsweise halbrohrförmig ausgestaltet und der Ablaufkanal weist seitliche Wandungen mit einer vorzugsweise mindestens dem Durchmesser der Auslaufmündung entsprechenden Höhe auf.

Der Übergang von der Ablauffläche zur wulstartigen Erhebung bildet zweckmässigerweise eine Rinne als Rücklaufsicherung.

Die wulstartige Erhebung kann zumindest teilweise mit einem elastischen Dichtmaterial überzogen sein.

Die wulstartige Erhebung und der an diese anschliessende Steg weist bevorzugt eine etwa einem Sechstel des Kreisumfangs entsprechende Länge auf.

Die Klemmteile können am Ausgussteil fixierte Blattfedern aus Federstahl sein.

Bevorzugt sind das Ausgussteil und die Klemmteile einstückig aus einem Zuschnitt durch Umform- und Biegeoperationen gefertigt.

Das Ausgussteil ist bevorzugt aus einem Zuschnitt aus Metallblech, vorzugsweise aus nicht rostendem Stahlblech, gefertigt.

Die erfindungsgemässe Vorrichtung eignet sich in besonderem Mass zum Umfüllen von Konfitüre aus einem Kochtopf in Gefässe mit beschränkter Öffnung.

### Kurze Beschreibung der Zeichnung

Weitere Vorteile, Merkmale und Einzelheiten der Erfindung ergeben sich aus der nachfolgenden Beschreibung von Ausführungsbeispielen sowie anhand der Zeichnung; diese zeigt schematisch in
- Fig. 1: die Draufsicht auf einem Stecklöffel;
- Fig. 2: den Schnitt durch den Stecklöffel von Fig. 1 nach der Linie I-I;
- Fig. 3: den Schnitt durch den Stecklöffel von Fig. 1 nach der Linie II-II;
- Fig. 4: eine Schrägsicht auf einen Kochtopf mit aufge- setztem Stecklöffel;
- Fig. 5: den Schnitt durch die Anordnung von Fig. 4 nach der Linie III-III;
- Fig. 6: den Schnitt von Fig. 5 bei Verwendung eines ers- ten Dichtungsmaterials;
- Fig. 7: den Schnitt von Fig. 5 bei Verwendung eines zwei- ten Dichtungsmaterials;
- Fig. 8: einen Schnitt durch die Anordnung von Fig. 4 im Bereich eines Klemmteils.

### Beschreibung von Ausführungsbeispielen

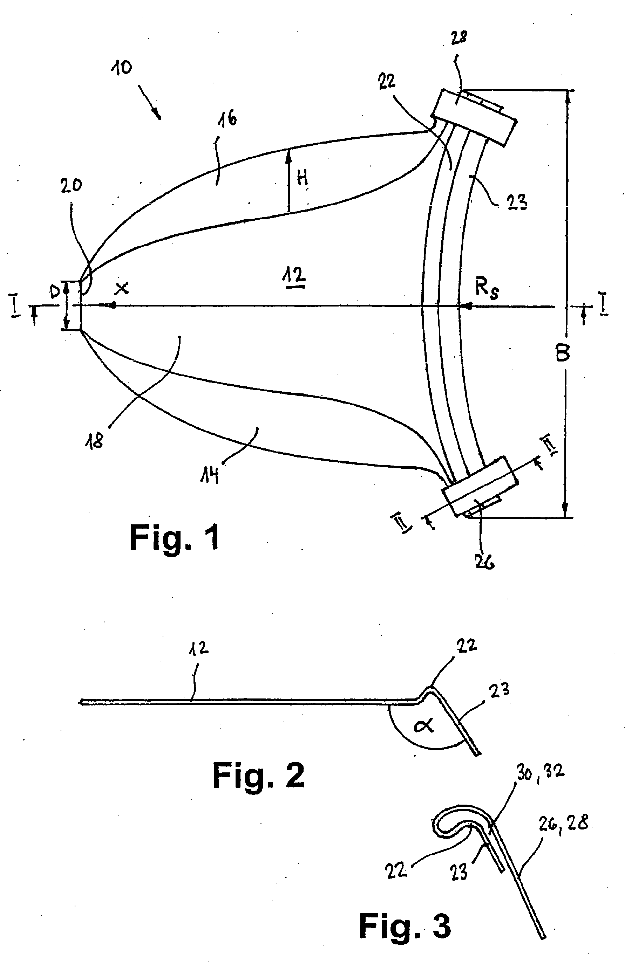

Eine in den Fig. 1 bis 3 dargestellte, als Stecklöffel ausgestaltete Ausgiessteil (10) für fliessfähige Schüttgüter weist eine durch seitlich hochgezogene Wandungen 14, 16 zu einem Ablaufkanal 18 geformte und in einer Ablaufrichtung x in einer Auslaufmündung 20 endende Ablauffläche 12 auf. An ihrem der Auslaufmündung 20 entgegengesetzten Ende ist die Ablauffläche 12 zu einer wulstartigen Erhebung 22 geformt. An ihren freien Ende geht die wulstartige Erhebung 22 in einen Steg 23 von 5 bis 10 mm Breite über.

Die wulstartige Erhebung 22 und der an diese anschliessende Steg 23 weisen einen kreisbogenförmigen Verlauf mit einem Radius Rₛ von beispielsweise 100 mm und einer etwa einem Sechstel des Kreisumfangs entsprechenden Länge von 100 mm auf. Dies entspricht einer Breite B des Stecklöffels an der Aufsteckseite von ebenfalls etwa 100 mm. Die wulstartige Erhebung 22 dient als weiter unten näher beschriebene Rücklaufsicherung.

Die wulstartige Erhebung 22 und der von dieser abragende Steg 23 sind an ihren beiden Enden von je einem streifenförmigen Klemmteil 26, 28 unter Bildung eines zwischen der wulstartigen Erhebung 22 mit anschliessendem Steg 23 und dem streifenförmigen Klemmteil 26, 28 gebildeten Spaltes 30, 32 übergriffen. Die Klemmteile 26, 28 sind hier integrale Teile eines einstückigen Zuschnitts, aus dem der Stecklöffel durch Umform- und Biegeoperationen hergestellt wird (Fig. 3).

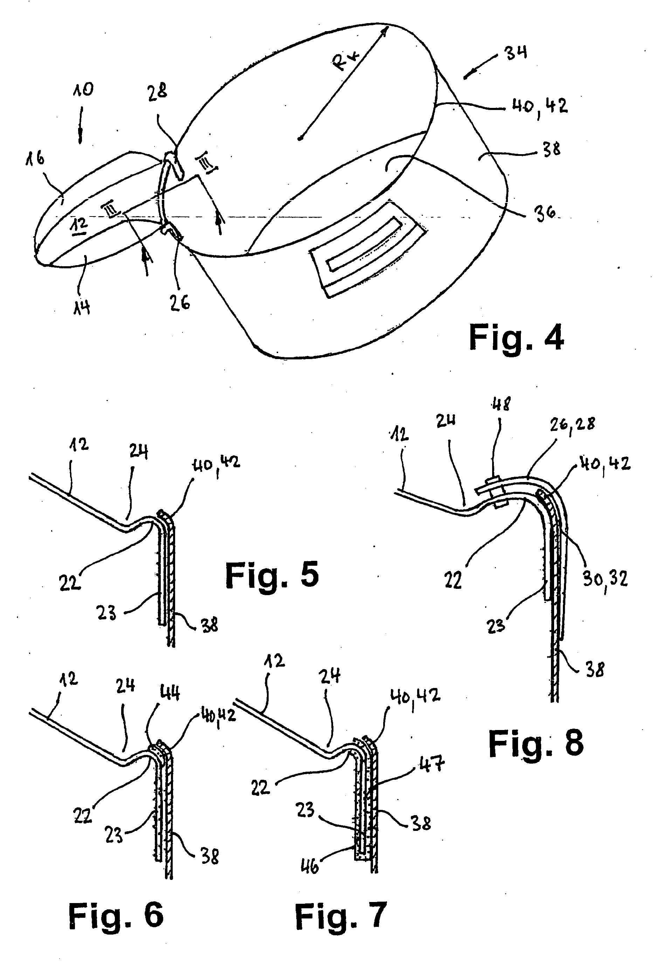

In Fig. 4 ist der in den Fig. 1 bis 3 gezeigte Stecklöffel auf den mit einer nach Aussen gerichteten Lippe oder Krümmung 42 versehenen Rand 40 eines im Haushalt üblichen Kochtopfes 34 mit einem Boden 36 und einer von diesem aufragenden zylindrischen Topfwand 38 mit einem Radius R_{K} von beispielsweise 100 mm aufgesteckt.

Wie in Fig. 8 gezeigt, liegen bei aufgestecktem Stecklöffel 10 die wulstartige Erhebung 22 und der von dieser abragende Steg 23 der Krümmung 42 des Topfrandes 40 bzw. der Topfwand 38 an der Aussenseite des Kochtopfes 34 an und sorgen für den festen Halt des Stecklöffels auf dem Kochtopf 34 und gleichzeitig für die leckagedichte Verbindung. Die streifenförmigen Klemmteile 26, 28 übergreifen den Topfrand 40 und stützen sich an der Innenseite der Topfwand 38 ab. Auf diese Weise ist der Stecklöffel am Rand 40 des Kochtopfs 34 eingespannt und rutscht bei einer Neigung des Kochtopfs 34 nicht aus seiner Klemmstellung. Die Klemmteile 26, 28 sind hier aus Federstahl gefertigte Blattfedern und über Nietverbindungen 48 am Stecklöffel fixiert.

Um eine Spaltbiidung und damit des Ablaufen von Leckage zwischen Kochtopf 34 und Stecklöffel zu vermeiden, sollte der Radius R_{S} des kreisbogenförmig verlaufenden Steges 23 mit dem Radius R_{K} der zylindrischen Topfwand 38 ungefähr übereinstimmen. Im Idealfall entspricht der Radius R_{S} des kreisbogenförmig verlaufenden Steges 23 dem Radius R_{K} der zylindrischen Topfwand 38. In diesem Fall liegt der Steg 23 der Aussenseite des Kochtopfes 34 am Topfrand 38 formschlüssig und dicht an (Fig. 5).

Im Haushalt gebräuchliche Kochtöpfe 34 weisen einen Radius R_{K} von 9 bis 12 cm auf. Damit nicht für jeden Kochtopf mit einem bestimmten Radius R_{K} ein dazu passender Stecklöffel 10 mit einem Radius R_{S} = R_{K} erforderlich ist, können Unterschiede in den Radien R_{S} und R_{K} durch eine zwischen der wulstartigen Erhebung 22 und der Krümmung 42 des Topfrandes 40 angeordneten Dichtungsmasse 44 aus einem elastischen Material ausgeglichen werden (Fig. 6). Die Dichtungsmasse 44 kann z. B. ein auf die wulstartigen Erhebung 22 aufgeklebter oder aufvulkanisierter Streifen aus einem Gummi- oder Kunststoffmaterial sein. Bei einer in Fig. 7 gezeigten alternativen Ausführungsform ist ein Dichtungsstreifen 46 mit einem Längsschlitz 47 versehen und auswechselbar auf den Steg 23 und einen Teil der wülstförmigen Erhebung 22 aufgesteckt.

Aus den Fig. 5 bis 8 ist ersichtlich, dass sich beim Übergang von der Ablauffläche 12 zur wulstartigen Erhebung 22 bei abgestelltem Kochtopfs 34 eine Rinne 24. Diese bewirkt, dass sich nach dem Absetzen des Einfüllvorgangs das zurückfliessende Schüttgut sammelt und nicht in den Spalt zwischen Kochtopf 34 und Stecklöffel dringen kann.

Der Winkel α zwischen der Ablauffläche 12 und dem Steg 23 liegt vorzugsweise zwischen 110° und 130°. Dieser Winkel erlaubt einerseits ein sicheres Ablaufen des Schüttguts zu Beginn des Schüttens bei gefülltem Kochtopf 34, ohne dass Schüttgut am Stecklöffel überläuft, und andererseits eine ausreichende Führung des Schüttstrahls, wenn der Kochtopf 34 praktisch entleert und um 90° bis 110° gekippt ist.

Die sichere Führung des Schüttstrahls wird gewährleistet durch eine Vertiefung der Auslaufmündung 20 des Stecklöffels sowie seiner konkaven Formgebung. Die Vertiefung hat die Form eines Halbrohrs bzw. einer bekannten Schöpfkelle. An den Seiten des Stecklöffels ist die Wandung 14, 16 stark hochgezogen, um bei einem Stau des Schüttguts auf dem Stecklöffel wegen langsam fliessender Feststoffe zu verhindern, dass das Schüttgut seitlich am Stecklöffel überläuft.

Der Stecklöffel besteht vorzugsweise aus nicht rostendem Stahl von ungefähr 0,5 bis 1 mm Dicke und wird auf einer Gesenkpresse geformt.

Der Stecklöffel bleibt beispielsweise bei der Herstellung und beim Abfüllen von Konfitüre während des gesamten Einkochprozesses mit mehrfachen Koch- und Füllzyklen auf dem Kochtopf 34 aufgesteckt, sodass hier keinerlei Handling entsteht. Nach Beendigung des Einkochprozesses wird der Stecklöffel einfach abgezogen und abgewaschen.

### Bezugszeichenliste

- 10: Ausgiessteil
- 12: Ablauffläche
- 14: erste Wandung
- 16: zweite Wandung
- 18: Ablaufkanal
- 20: Auslaufmündung
- 22: wulstartige Erhebung
- 23: Steg
- 24: Rinne
- 26: erstes streifenförmiges Klemmteil
- 28: zweites streifenförmiges Klemmteil
- 30: erster Spalt
- 32: zweiter Spalt
- 34: Kochtopf
- 36: Topfboden
- 38: Topfwand
- 40: Topfrand
- 42: Krümmung
- 44: Dichtungsmasse
- 46: Dichtungsstreifen
- 47: Längsschlitz
- 48: Nietverbindung

- D: Durchmesser von 20
- H: Höhe von 14, 16
- B: Breite von 10
- R_{K}: Radius von 34
- R_{S}: Radius von 22, 23
- X: Ablaufrichtung von 10

## Patentansprüche

1. Vorrichtung zum Austragen von fliessfähigem Schüttgut aus einem ersten Behälter (34) mit einem Boden (36) und einer von diesem aufragenden zylindrischen Behälterwand (38) mit weitem, mit nach Aussen gerichteter Krümmung (42) versehenem Behälterrand (40) und Eintragen des Schüttguts in einen zweiten Behälter mit enger Einfüllöffnung, wobei das Schüttgut durch Kippen des ersten Behälters (34) über dessen Behälterrand (40) in den zweiten Behälter fliesst, mit einem auf den Rand (40) des ersten Behälters (34) aufsteckbaren Ausgiessteil (10) mit einer löffelartig zu einem Ablaufkanal (18) mit einer Ablaufrichtung (x) geformten, an einem Ende eine Auslaufmündung (20) bildende und am anderen Ende mit einem an die Aussenseite der Behälterwand (38) anlegbaren Steg (23) begrenzten Ablauffläche (12) und im wesentlichen kraftschlüssig an die Innenseite der Behälterwand (38) anlegbaren Klemmteilen (26, 28),
**dadurch gekennzeichnet, dass**
eine im wesentlichen formschlüssig an die Krümmung (42) des Behälterrandes (40) anlegbare, kreisbogenförmig verlaufende wulstartige Erhebung (22) vorgesehen ist, wobei der Steg (23) an die wulstartige Erhebung (22) angrenzt, und dass die Klemmteile (26, 28) die wulstartige Erhebung (22) und den Steg (23) übergreifen.

2. Vorrichtung nach Anspruch 1, **dadurch gekennzeichnet, dass** die Ablauffläche (12) und der Steg (23) einen Winkel (α) von 100° bis 150°, vorzugsweise 110° bis 130°, insbesondere 115° bis 125° einschliessen.

3. Vorrichtung nach Anspruch 1 oder 2, **dadurch gekennzeichnet, dass** die Auslaufmündung(20) halbrohrförmig ausgestaltet ist und der Ablaufkanal (18) seitliche Wandungen (14, 16) mit einer mindestens dem Durchmesser (D) der Auslaufmündung (20) entsprechenden Höhe (H) aufweist.

4. Vorrichtung nach einem der Ansprüche 1 bis 3, **dadurch gekennzeichnet, dass** der Übergang von der Ablauffläche (12) zur wulstartigen Erhebung (22) eine Rinne (24) als Rücklaufsicherung bildet.

5. Vorrichtung nach einem der Ansprüche 1 bis 4, **dadurch gekennzeichnet, dass** die wulstartige Erhebung (22) zumindest teilweise mit einem elastischen Dichtmaterial überzogen ist.

6. Vorrichtung nach einem der Ansprüche 1 bis 5, **dadurch gekennzeichnet, dass** die wulstartige Erhebung (22) und der an diese anschliessende Steg (23) eine etwa einem Sechstel des Kreisumfangs entsprechende Länge aufweisen.

7. Vorrichtung nach einem der Ansprüche 1 bis 6, **dadurch gekennzeichnet, dass** die Klemmteile (26, 28) am Ausgussteil (10) fixierte Blattfedern aus Federstahl sind.

8. Vorrichtung nach einem der Ansprüche 1 bis 6, **dadurch gekennzeichnet, dass** das Ausgussteil (10) und die Klemmteile (26, 28) einstückig aus einem Zuschnitt durch Umform- und Biegeoperationen gefertigt sind.

9. Vorrichtung nach einem der Ansprüche 1 bis 8, **dadurch gekennzeichnet, dass** das Ausgussteil (10) aus einem Zuschnitt aus Metallblech, vorzugsweise aus nicht rostendem Stahlblech, gefertigt ist.

10. Verwendung der Vorrichtung nach einem der vorangehenden Ansprüche zum Umfüllen von Konfitüre aus einem Kochtopf in Gefässe mit beschränkter Öffnung.

## Claims

1. An apparatus for discharging flowable bulk material from a first container (34) having a base (36) and a cylindrical container wall (38), rising up therefrom, with a wide container rim (40) provided with an outwardly directed curvature (42), and for feeding the bulk material into a second container with narrow filling opening, wherein the bulk material, as a result of the first container (34) being tilted, flows over the container rim (40) thereof into the second container, with a pour-out part (10) mountable onto the rim (40) of the first container (34), comprising a run-off surface (12), which is shaped in the style of a spoon into a run-off channel (18) with a run-off direction (x) and at one end forms an outflow mouth (20) and at the other end is delimited by a run-off surface (12) comprising a web (23) which can be fitted to the outer side of the container wall (38), and clamping parts (26, 28) which can be fitted to the inner side of the container wall (38) in a substantially non-positive-locking manner,
**characterized by**
a bead-like elevation (22) extending in a circular arc shape, which can be fitted to the curvature (42) of the container rim (40) in a substantially non-positive-locking manner, with the web (23) bordering the bead-like elevation (22), and the clamping parts (26, 28) reaching over the bead-like elevation (22) and the web (23).

2. The apparatus as claimed in claim 1, **characterized in that** the run-off surface (12) and the web (23) form an angle (α) from 100° to 150°, preferably 110° to 130°, in particular 115° to 125°.

3. The apparatus as claimed in claim 1 or 2, **characterized in that** the outflow mouth (20) is configured in the shape of a half-tube and the run-off channel (18) has side walls (14, 16) of a height (H) corresponding at least to the diameter (D) of the outflow mouth (20).

4. The apparatus as claimed in one of claims 1 to 3, **characterized in that** the transition from the run-off surface (12) to the bead-like elevation (22) forms a gully (24) as backflow protection.

5. The apparatus as claimed in one of claims 1 to 4, **characterized in that** the bead-like elevation (22) is coated at least partially with an elastic sealing material.

6. The apparatus as claimed in one of claims 1 to 5, **characterized in that** the bead-like elevation (22), and the web (23) adjoining thereto, have a length corresponding to roughly one-sixth of the circumference of the circle.

7. The apparatus as claimed in one of claims 1 to 6, **characterized in that** the clamping parts (26, 28) are leaf springs, made of spring steel, fixed to the pour-out part (10).

8. The apparatus as claimed in one of claims 1 to 6, **characterized in that** the pour-out part (10) and the clamping parts (26, 28) are produced in one piece from a blank by forming and bending operations.

9. The apparatus as claimed in one of claims 1 to 8, **characterized in that** the pour-out part (10) is produced from a blank made of metal plate, preferably of stainless steel plate.

10. The use of the apparatus according to one of the preceding claims for transferring jam from a saucepan into vessels having a restricted opening.

## Revendications

1. Dispositif pour décharger du produit en vrac coulant d'un premier récipient (34) avec un fond (36) et une paroi de récipient cylindrique (38) se dressant depuis celui-ci, avec un bord de récipient (40) large, pourvu d'une courbure (42) orientée vers l'extérieur, et pour charger le produit en vrac dans un deuxième récipient avec une ouverture de remplissage étroite, le produit en vrac s'écoulant par basculement du premier récipient (34) par-dessus son bord de récipient (40) dans le deuxième récipient, avec une partie de déversement (10) pouvant être enfichée sur le bord (40) du premier récipient (34) comprenant une surface de sortie (12) en forme de louche pour créer un canal de sortie (18) avec une direction de sortie (x), formant une embouchure de sortie (20) à une extrémité et limitée à l'autre extrémité par une nervure (23) pouvant s'appliquer contre le côté extérieur de la paroi du récipient (38), et des parties de serrage (26, 28) pouvant s'appliquer essentiellement par engagement par force contre le côté intérieur de la paroi du récipient (38) ,
**caractérisé en ce que**
l'on prévoit un rehaussement (22) en forme de bourrelet s'étendant en forme d'arc de cercle, pouvant s'appliquer essentiellement par engagement par coopération de forme contre la courbure (42) du bord du récipient (40),
la nervure (23) étant adjacente au rehaussement (22) en forme de bourrelet,
et **en ce que** les parties de serrage (26, 28) viennent en prise par le dessus avec le rehaussement (22) en forme de bourrelet et avec la nervure (23).

2. Dispositif selon la revendication 1, **caractérisé en ce que** la surface de sortie (12) et la nervure (23) forment un angle (α) de 100° à 150°, de préférence de 110° à 130°, notamment de 115° à 125°.

3. Dispositif selon la revendication 1 ou 2, **caractérisé en ce que** l'embouchure de sortie (20) est configurée en forme de demi-tube et le canal de sortie (18) présente des parois latérales (14, 16) avec une hauteur (H) correspondant au moins au diamètre (D) de l'embouchure de sortie (20).

4. Dispositif selon l'une quelconque des revendications 1 à 3, **caractérisé en ce que** la transition de la surface de sortie (12) au rehaussement (22) en forme de bourrelet forme une rigole (24) en tant que protection contre le reflux.

5. Dispositif selon l'une quelconque des revendications 1 à 4, **caractérisé en ce que** le rehaussement (22) en forme de bourrelet est au moins en partie recouvert d'un matériau d'étanchéité élastique.

6. Dispositif selon l'une quelconque des revendications 1 à 5, **caractérisé en ce que** le rehaussement (22) en forme de bourrelet et la nervure (23) s'y raccordant présentent une longueur correspondant approximativement à un sixième de la circonférence du cercle.

7. Dispositif selon l'une quelconque des revendications 1 à 6, **caractérisé en ce que** les parties de serrage (26, 28) sont des ressorts à lame en acier à ressort fixés sur la partie de déversement (10).

8. Dispositif selon l'une quelconque des revendications 1 à 6, **caractérisé en ce que** la partie de déversement (10) et les parties de serrage (26, 28) sont fabriquées d'une seule pièce à partir d'une pièce découpée par des opérations de formage et de cintrage.

9. Dispositif selon l'une quelconque des revendications 1 à 8, **caractérisé en ce que** la partie de déversement (10) est fabriquée à partir d'une pièce découpée en tôle métallique, de préférence en tôle d'acier inoxydable.

10. Utilisation du dispositif selon l'une quelconque des revendications précédentes, pour déverser des confitures d'une casserole dans des récipients ayant une ouverture limitée.
